# FASCICULE DE BREVET EUROPEEN

(11) **EP 4 083 572 B1**
(45) Date de publication et mention de la délivrance du brevet: **05.11.2025**
(21) Numéro de dépôt: 21171306.0
(22) Date de dépôt: 29.04.2021
(51) Int. Cl.: G01C 5/06, G01C 13/00, G01L 7/08, G04B 47/06

(54) **PROFONDIMETRE AVEC JOINT D'ETANCHEITE**
TIEFENMESSER MIT DICHTUNGSFUGE
DEPTH GAUGE WITH SEAL

(43) Date de publication de la demande: 02.11.2022
(73) Titulaire: Blancpain SA, 1348 Le Brassus (CH)
(72) Inventeur: THUET, Arnaud, 39220 Les Rousses (FR)
(74) Mandataire: ICB SA

(56) Documents cités:
- EP-A1- 0 670 532
- EP-A1- 2 264 399
- JP-A- 2015 200 192
- US-A- 3 651 693

## Description

### Domaine technique de l'invention

Le domaine de l'invention concerne les dispositifs permettant d'étanchéifier un profondimètre soumis à la pression d'un fluide.

L'invention se rapporte à un profondimètre mécanique comportant un joint d'étanchéité, un capteur de pression à membrane, le joint d'étanchéité assurant l'étanchéité au niveau du capteur de pression à membrane.

L'invention se rapporte également à une pièce d'horlogerie comportant un tel profondimètre mécanique.

### Arrière-plan technologique

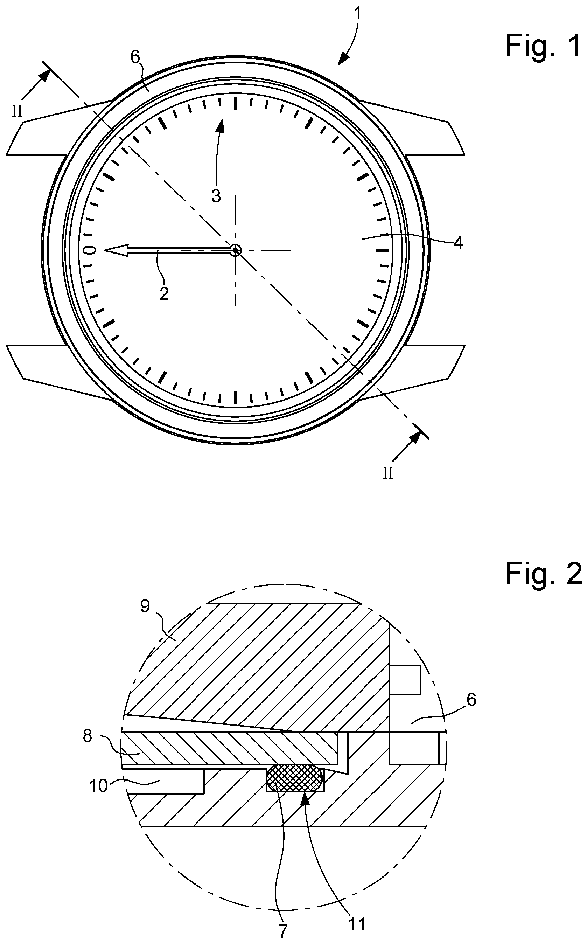

Comme illustré à la figure 1, les profondimètres mécaniques 1 permettent d'indiquer la profondeur d'eau, par exemple au moyen d'une aiguille 2 tournant en regard d'une graduation 3 d'un cadran 4, notamment à l'aide d'un capteur de pression logé dans le boîtier 6 du profondimètre. Le capteur de pression est classiquement relié à l'aiguille 2 par une transmission mécanique.

Le capteur de pression est généralement logé dans une chambre de pression ménagée dans le boîtier 6, une telle chambre est destinée à recevoir un fluide sous pression.

Dans les profondimètres mécaniques, il est courant que le capteur de pression comporte une membrane déformable, par exemple sous la forme d'un disque métallique comportant des ondulations concentriques de manière à modifier l'amplitude de déflexion élastique.

Pour fixer un tel capteur de pression et assurer l'étanchéité entre l'intérieur et l'extérieur du boîtier du profondimètre, il est connu de souder la membrane déformable, voir par exemple la demande de brevet DE 10 147 124, ou encore de réaliser un pincement de la membrane déformable comme proposé dans le document WO 01/01098. Toutefois, la fabrication de ces membranes déformables est assez compliquée et ne présente pas une bonne reproductibilité. En outre, il n'est pas facile de s'assurer que la membrane déformable n'entrera pas dans son domaine de déformation plastique dans le cas où le capteur de pression serait soumis à une pression outrepassant la pression de service.

Pour remédier à ces inconvénients, les fabricants ont remplacé ces disques métalliques à ondulations par des membranes déformables plates, mais le mode de fixation continue de créer des inconvénients assez importants. En effet, si l'on soude la région périphérique de la membrane déformable à la structure du capteur, cela diminue la déformation élastique que peut subir la membrane avant d'être déformée plastiquement, donc la sensibilité du capteur de pression est réduite.

En outre, le soudage introduit des caractéristiques de raideur différentes pour chaque soudure. Les imprécisions qui en résultent sur les déflexions de la membrane déformable réduisent évidemment la précision du capteur et, en outre, rendent difficile l'utilisation de butées empêchant des déformations plastiques de la membrane déformable. Une fixation de la membrane déformable par encastrement dans la structure du capteur présente également certains des inconvénients susmentionnés.

Pour remédier en partie à ces inconvénients, il a été proposé un capteur de pression de conception simple, permettant à la membrane déformable de fléchir aussi librement que possible sous la pression du fluide tout en conservant une bonne étanchéité grâce à l'utilisation d'un joint d'étanchéité.

Ainsi, le document EP 2 264 399 propose de ne pas lier rigidement la région périphérique de la membrane déformable au corps du profondimètre, ou au couvercle, notamment par soudage ou par encastrement, de manière à ce que la région périphérique de la membrane déformable puisse pivoter sur une bande de butée lorsque la membrane déformable fléchit sous l'effet d'une augmentation de pression du fluide dans la chambre de pression. Une telle architecture est représentée par la figure 2, qui illustre une région périphérique du boitier 6 d'un profondimètre 1.

Pour assurer l'étanchéité d'un tel montage, un joint d'étanchéité 7, de type torique, est comprimé contre la région périphérique de la membrane déformable 8 pour assurer l'étanchéité du volume intérieur du profondimètre vis-à-vis de la chambre de pression 10. Le joint d'étanchéité 7 sert en outre d'élément d'appui pour presser constamment la région périphérique de la membrane déformable 8 contre une butée 9, notamment lors du pivotement de la membrane déformable 8.

Le joint torique 7 est logé dans une rainure circulaire 11, à profil rectangulaire, ménagée au niveau du fond du profondimètre. Une telle rainure circulaire 11 présente l'avantage de faciliter le positionnement du joint torique 7 lors du montage. Une telle rainure circulaire 11 permet également de limiter l'étalement radial du joint torique 7 lors de sa mise en compression, pendant l'assemblage ainsi que lors de la mise en pression de la chambre de pression 10 et donc de la déformation de la membrane déformable 8. La rainure circulaire 11 permet donc de garantir une pression de contact sur la membrane déformable 8 suffisante pour assurer l'étanchéité requise dans la gamme d'utilisation du profondimètre.

Toutefois, en cas d'utilisation intensive du profondimètre, tel que présenté dans la demande EP 2 264 399 et illustré à la figure 2, et/ou en cas de mauvais nettoyage de celui-ci par l'utilisateur, des résidus salins peuvent s'accumuler dans la rainure circulaire 11 ou à proximité de cette rainure circulaire, conduisant à un risque de corrosion de cette région et à une usure prématurée de la membrane déformable 8.

### Résumé de l'invention

Dans ce contexte, l'invention propose un profondimètre comportant un nouveau joint d'étanchéité présentant un profil particulièrement adapté à une utilisation au niveau d'un capteur de pression, notamment à membrane déformable permettant d'assurer correctement les niveaux d'étanchéité requis pour une telle utilisation, tout en permettant de simplifier la géométrie des différents éléments au niveau de la zone d'étanchéité du profondimètre de manière à éviter l'accumulation des résidus salins dans cette région périphérique de la membrane déformable.

A cette effet, l'invention a pour objet un profondimètre mécanique à membrane déformable selon la revendication 1.

Outre les caractéristiques évoquées dans le paragraphe précédent, le profondimètre mécanique à membrane déformable selon l'invention peut présenter une ou plusieurs caractéristiques complémentaires parmi les suivantes, considérées individuellement ou selon toutes les combinaisons techniquement possibles :
- le joint d'étanchéité présente une section, selon un plan de coupe radial, présentant une forme polygonale ;
- la section présente une forme trapézoïdale comportant deux côtés parallèles, les deux côtés parallèles du trapèze étant formés par le flanc radialement externe et le flanc radialement interne ;
- la section présente une face supérieure comportant au moins une portion plane inclinée par rapport à une face inférieure ;
- la face supérieure comporte une première portion plane parallèle à une face inférieure et une portion plane inclinée par rapport à la face inférieure ;
- ladite au moins une portion plane inclinée présente une inclinaison par rapport à ladite face inférieure, ladite inclinaison étant supérieure à 0° et inférieure ou égale à 45°;
- le joint d'étanchéité présente une section, selon un plan de coupe radial, présentant une forme en quart de cercle ;
- le joint d'étanchéité est en élastomère, préférentiellement en nitrile ;
- le joint est configuré pour être comprimé contre une membrane déformable d'un capteur de pression de profondimètre.

Avantageusement, le joint d'étanchéité est comprimé et forme un élément d'appui de ladite membrane déformable.

Avantageusement, le joint d'étanchéité est disposé au niveau d'une région périphérique de ladite membrane déformable.

Avantageusement, la région périphérique de la membrane déformable peut pivoter en appui sur le joint d'étanchéité lorsque la membrane déformable se déforme sous l'effet d'une augmentation de pression dans la chambre de pression.

Avantageusement, le fond est dépourvu d'une gorge ou d'une rainure pour le logement du joint d'étanchéité.

Avantageusement, le fond comporte une face supérieure délimitant une portion inférieure de ladite chambre de pression, le joint d'étanchéité étant positionné directement sur la face supérieure du fond délimitant ladite portion inférieure de ladite chambre de pression.

Avantageusement, le profondimètre comporte un organe d'indexage ménagé sur la face supérieure du fond pour faciliter le centrage dudit joint d'étanchéité.

Avantageusement, le joint d'étanchéité délimite une portion périphérique de ladite chambre de pression.

Avantageusement, la membrane déformable est formée par un disque métallique ou par un disque en alliage métallique amorphe.

Avantageusement, le disque est plat.

L'invention a également pour objet une pièce d'horlogerie, par exemple une montre, et plus particulièrement une montre de plongée, comportant un profondimètre selon l'invention.

### Brève description des figures

Les buts, avantages et caractéristiques de la présente invention apparaîtront à la lecture de la description détaillée ci-dessous faisant référence aux figures suivantes :
- la figure 1 est une représentation schématique selon une vue frontale d'un profondimètre pourvu d'un capteur de pression à membrane selon l'état de la technique ;
- la figure 2 est une représentation partielle en coupe radiale suivant la ligne Il II de la région périphérique du profondimètre de l'état de la technique illustré à la figure 1 ;
- la figure 3 est une vue schématique et partielle en coupe radiale d'un exemple de réalisation d'un profondimètre selon l'invention pourvu d'un capteur de pression à membrane et d'un joint d'étanchéité selon l'invention ;
- la figure 4 est une vue agrandie du détail III de la figure 3, illustrant plus particulièrement la région périphérique du capteur de pression et du joint d'étanchéité selon l'invention lorsque le profondimètre n'est pas soumis à une pression extérieure supérieure à la pression atmosphérique ;
- la figure 5 est une vue agrandie du détail III de la figure 3, illustrant plus particulièrement la région périphérique du capteur de pression et du joint d'étanchéité selon l'invention lorsque le profondimètre est soumis à une pression extérieure supérieure à la pression atmosphérique ;
- la figure 6 est une représentation schématique de la section selon un plan de coupe radial d'un premier exemple de réalisation du joint d'étanchéité selon l'invention ;
- la figure 7 est une représentation schématique de la section selon un plan de coupe radial d'un deuxième exemple de réalisation du joint d'étanchéité selon l'invention ;
- la figure 8 est une variante de réalisation du premier exemple de réalisation du joint d'étanchéité selon l'invention illustré à la figure 6.

Dans toutes les figures, les éléments communs portent les mêmes numéros de référence sauf précision contraire.

### Description détaillée de l'invention

Les figures 1 et 2 ont été présentées précédemment dans le préambule de l'invention.

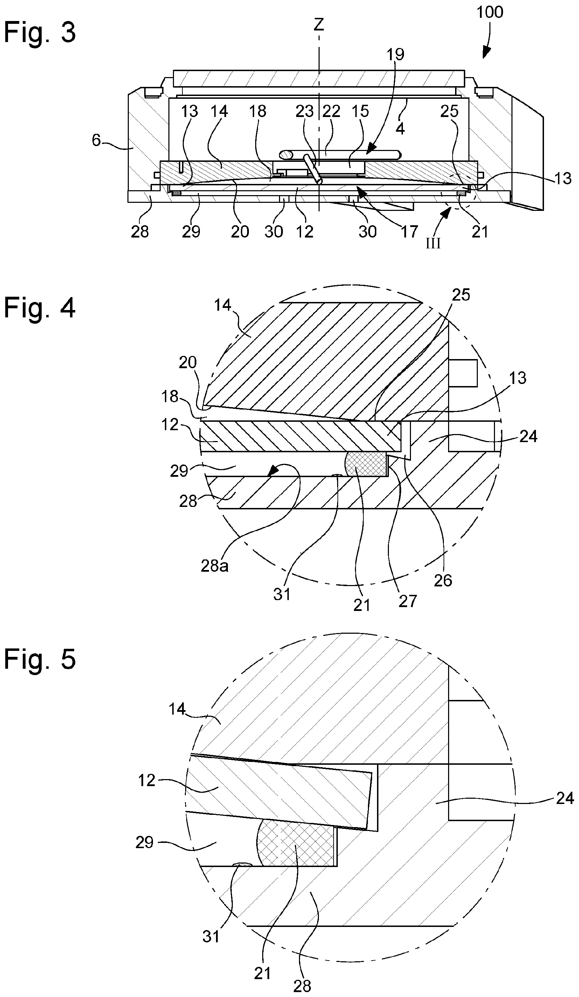

Les figures 3 à 5 représentent schématiquement un profondimètre 100, d'axe de révolution Z, selon l'invention.

Le profondimètre 100 est, par exemple, un profondimètre destiné à être porté au poignet d'un utilisateur, grâce à un bracelet (non représenté). De manière classique, le profondimètre 100 selon l'invention comporte une aiguille 2 indiquant la profondeur d'eau, l'aiguille 2 tournant en regard d'une graduation 3 ménagée sur un cadran 4, à l'aide d'un capteur de pression 17 logé dans le boîtier 6 du profondimètre 100.

Le capteur de pression 17, positionné en partie inférieure du boîtier 6, est relié à l'aiguille 2 par un organe de transmission 19 mécanique configuré pour transformer le mouvement axial du capteur de pression 17, le long de l'axe de révolution Z du profondimètre 100, en un mouvement de rotation autour de l'axe de révolution Z.

L'organe de transmission 19 comporte notamment un arbre rotatif 22 pourvu d'un palpeur 23. Bien entendu, d'autres architectures d'organe de transmission mécanique peuvent être envisagées sans sortir du contexte de l'invention.

On notera que le profondimètre 100 peut être combiné à une montre dans le même boîtier 6, notamment une montre de plongée, sans être toutefois indispensable. Dans ce cas, le boîtier 6 comporte en outre un mouvement horloger (non représenté) et le cadran 3 présente des graduations pour indiquer des informations relatives à des informations horaires.

Le boîtier 6 est fermé par un fond 11 ajouré. Le capteur de pression 17 est par exemple monté sur le fond 11 du boîtier 6, comme illustré aux figures 3 à 5.

Le capteur de pression 17 est disposé au-dessus d'une chambre de pression 29 délimitée par le fond 28. La chambre de pression 29 communique avec l'extérieur du boîtier 6 par des orifices 30, de manière à ce que la chambre de pression 29 soit en communication fluidique avec l'extérieur du profondimètre 100. Ainsi le fluide contenu dans cette chambre de pression 29 est soumis à la pression régnant autour du profondimètre 100.

Le capteur de pression 17 comporte une membrane déformable 12, par exemple de forme plate et circulaire, dont la région périphérique 13 est serrée entre le fond 28 et une butée rigide 14 fixée dans le boîtier 6 apte à limiter la déformation de la membrane déformable 12 du capteur de pression 17.

Dans l'exemple de réalisation représenté à la figure 3, la butée rigide 14 est pourvue d'une ouverture centrale 15, notamment pour le passage du palpeur 23. Ainsi, le palpeur 23 peut se mouvoir verticalement dans l'ouverture 15 et faire pivoter l'arbre 22 en fonction des déplacements (déformations) de la membrane déformable 12.

Bien entendu la forme de la butée rigide 14 peut être différente et ne pas présenter d'ouverture centrale 15 en fonction de l'architecture de l'organe de transmission utilisée.

Un ressort de rappel (non représenté) maintient l'extrémité libre du palpeur 23 en appui contre la membrane déformable 12 de façon à assurer un contact permanent entre ces deux éléments.

Entre l'ouverture 15 et la région périphérique 13 de la membrane déformable 12, la butée rigide 14 présente une face inférieure légèrement concave qui délimite, avec la membrane déformable 12, une chambre 18 communiquant avec le reste du volume intérieur du boîtier 6 par l'ouverture 15. Cette face concave constitue une surface d'arrêt 20 pour limiter la déflexion de la membrane déformable 12 dès que celle-ci est soumise à une pression différentielle dépassant une pression limite qui sera définie plus loin.

Le volume intérieur du boîtier 6 contient de l'air ou un autre gaz, à une pression de référence.

Un joint d'étanchéité 21, d'axe de révolution Z, est comprimé contre la membrane déformable 12, plus particulièrement au niveau de sa région périphérique 13, et assure l'étanchéité du volume intérieur du boîtier 6 vis-à-vis de la chambre de pression 29 et de l'extérieur du boîtier 6.

Le joint d'étanchéité 21 forme également un élément d'appui de la membrane déformable 12, configuré pour presser constamment la région périphérique 13 de la membrane déformable 12 contre la butée rigide 14, quel que soit l'état de déformation de la membrane déformable 12. La compression du joint d'étanchéité 21 contre la membrane déformable permet d'obtenir une pression de contact suffisante pour assurer l'étanchéité du boîtier 6.

Comme illustré à la figure 5, qui illustre plus précisément la région périphérique du capteur de pression 17 et du joint d'étanchéité 21 selon l'invention lorsque la membrane déformable 12 est déformée et que le capteur de pression 17 est soumis à une pression différentielle entre les chambres 29 et 18, le joint d'étanchéité 21 est configuré pour permettre le pivotement de la région périphérique 13 de la membrane déformable 12 tout en assurant les pressions de contact nécessaires pour assurer l'étanchéité du volume intérieur du boîtier 6.

Le fond 28 présente un rebord vertical 24, ménagé dans une région périphérique du fond 28, qui bute contre la butée rigide 14 et dont la hauteur est choisie de manière à ce que le joint d'étanchéité 21 soit, comme illustré à la figure 4, fortement précontraint contre la membrane déformable 12, pour garantir l'étanchéité entre eux dans toute la gamme des pressions de service du capteur de pression 17 du profondimètre 100.

La compression du joint d'étanchéité 21 presse la région périphérique 13 de la membrane déformable 12 contre une partie de la butée rigide 14, à savoir une bande d'appui 25 qui suit le pourtour de la surface d'arrêt concave 20 et se trouve pratiquement en face de la position du joint d'étanchéité 21. La bande d'appui 25 est plane dans cet exemple, mais elle pourrait aussi avoir un profil transversal bombé ou en arête.

Le matériau et l'épaisseur de la membrane déformable 12 sont choisis de manière à ce que les déformations de la membrane déformable 12 restent dans le domaine élastique dans toute la gamme des pressions auxquelles le capteur 17 sera soumis.

La membrane déformable 12 est réalisée à partir d'un matériau classiquement utilisé et connu de l'homme du métier pour une telle application.

De préférence, la membrane déformable 12 est un disque métallique ou encore un disque en alliage métallique amorphe également appelé verre métallique.

Grâce à sa forme plane au repos, le procédé de fabrication de la membrane déformable est réalisé facilement, par exemple par découpage dans une feuille d'acier inoxydable. Les autres éléments du capteur de pression 17, hormis le joint d'étanchéité 21, peuvent être réalisés en métal ou en matière synthétique rigide, par exemple.

Lorsque le profondimètre 100 est plongé à une certaine profondeur dans l'eau, la membrane déformable 12 fléchit élastiquement sous la pression différentielle accrue entre les chambres 29 et 18 situées de part et d'autre de la membrane déformable 12. La déflexion de la membrane déformable 12 est transmise au palpeur 23. La transmission mécanique par l'organe de transmission 19 entre le palpeur 23 et l'aiguille 2 est agencée pour produire un déplacement pratiquement linéaire de l'aiguille 2 en fonction de la variation de pression. Toutefois, il est également possible de produire un déplacement non linéaire de l'aiguille 2 en fonction de l'organe de transmission 19 et des différents rouages utilisés. Dans ce cas, le cadran présentera une graduation 3 non linéaire.

La forme donnée à la surface d'arrêt 20 correspond avantageusement au profil de la déformée de la membrane déformable 12 pour la pression limite mentionnée plus haut. Ce profil, théoriquement parabolique pour une membrane circulaire dont les déflexions sont petites, peut être approché par une forme de calotte sphérique, facile à usiner. De préférence, ladite pression limite est un peu supérieure à la pression de service maximale du profondimètre 100. Comme celui-ci doit généralement être soumis à une pression d'essai maximale largement supérieure à la pression de service maximale, le rôle principal de la surface d'arrêt 20 est d'éviter des déformations plastiques de la membrane déformable 12 dans ces conditions d'essai, puisque la membrane déformable 12 est alors épaulée par la butée rigide 14 qui est beaucoup plus rigide que lui.

Dans l'exemple de réalisation illustrée aux figures 3 à 5, seule la partie centrale de la membrane déformable 12 en regard de l'ouverture 15 pourrait subir un surcroît de flexion, mais les contraintes supplémentaires sont réduites et, avec un dimensionnement adéquat, peuvent rester dans le domaine élastique. Bien entendu, ces avantages existent aussi dans des cas où le capteur de pression subirait accidentellement une pression excessive, par exemple un coup de bélier dans un manomètre.

Étant donné que la région périphérique 13 de la membrane déformable 12 n'est ni soudée ni encastrée dans la structure qui la supporte, elle peut pivoter quasi librement sur la bande d'appui 25 pour s'incliner et se rapprocher de la surface de butée 20.

On notera également qu'un dégagement 26 est ménagé entre le joint d'étanchéité 21 et le rebord vertical 24 pour permettre à la bordure de la membrane déformable 12 de s'abaisser librement lors de la déformation de celle-ci.

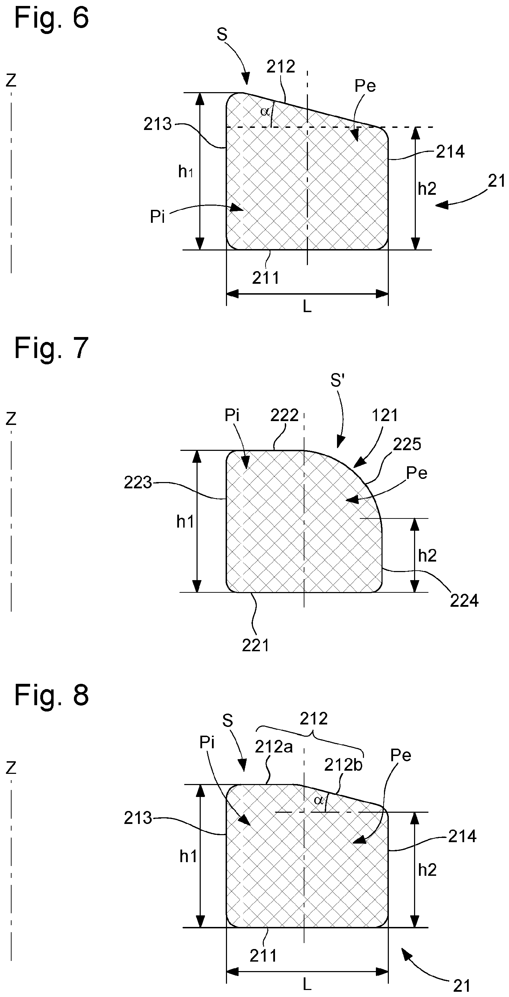

La figure 6 représente un premier exemple de réalisation du joint d'étanchéité 21 selon l'invention et la figure 7 représente un deuxième exemple de réalisation du joint d'étanchéité 121 selon l'invention.

La figure 6 illustre plus précisément, de manière schématique, la section S, selon un plan de coupe radial, du premier exemple de réalisation du joint d'étanchéité 21 selon l'invention, dans son état non comprimé.

La figure 7 illustre plus précisément, de manière schématique, la section S', selon un plan de coupe radial, du deuxième exemple de réalisation du joint d'étanchéité 121 selon l'invention, dans son état non comprimé.

Contrairement aux joints d'étanchéité connus de l'état de la technique décrit dans le préambule de l'invention en référence à la figure 2, le joint d'étanchéité 21, 121 selon l'invention présente une section non circulaire et ne présente pas de symétrie entre une portion radialement interne Pi et une portion radialement externe Pe.

Sur les figures 6 et 7, une portion radialement interne Pi est positionnée à gauche d'un axe en pointillés représentant le milieu de la largueur L de la section S, S' du joint d'étanchéité 21, 121, et une portion radialement externe Pe est positionnée à droite de l'axe en pointillés en question.

Les expressions « radialement interne » et « radialement externe » sont bien entendu à prendre en considération vis-à-vis de l'axe de révolution Z du profondimètre 100 et du joint d'étanchéité 21, 121, les deux axes de révolution étant confondus. Ainsi, une portion, un flanc ou une face radialement interne est plus proche radialement de l'axe de révolution Z qu'une portion, un flanc ou une face radialement externe.

On entend par flanc la partie latérale du joint d'étanchéité 21, 121.

Comme représenté aux figures 6 à 8, le joint d'étanchéité 21, 121 présente, dans son état non comprimé, un flanc radialement interne 213, 223 présentant une hauteur h1 plus importante que la hauteur h2 du flanc radialement externe, induisant donc une différence d'épaisseur de matière entre la portion radialement interne Pi et la portion radialement externe Pe du joint d'étanchéité 21, 121.

A titre d'exemple, le rapport entre la hauteur h1 du flanc radialement interne 213, 223 sur la hauteur h2 du flanc radialement externe 214, 224 est compris entre 2 et 1,25.

A titre d'exemple, la hauteur h1 du flanc radialement interne 213, 223 est identique à la largeur L du joint d'étanchéité 21, 121.

La différence de hauteur entre le flanc radialement interne 213, 223 et le flanc radialement externe 214, 224 permet avantageusement d'obtenir une différence de volume de matière, entre la portion radialement interne Pi et la portion radialement externe Pe du joint d'étanchéité 21, 121.

Cette différence entre la portion radialement interne Pi et la portion radialement externe Pe permet de conserver une pression de contact suffisante sur toute la surface de contact du joint d'étanchéité 21 lorsque la membrane déformable 12 se déforme et pivote au niveau du joint d'étanchéité 21, 121, relâchant ainsi la pression de contact obtenue préalablement lors de la compression du joint d'étanchéité 21, 121, lors du serrage et du montage du fond 28 sur le boîtier 6. En effet, lorsque la membrane déformable 12 se déforme sous une pression positive, elle va se déplacer dans la direction de la butée rigide 14 et donc s'éloigner du fond 28 de boite.

Le joint d'étanchéité 21, 121 selon l'invention présente une géométrie permettant avantageusement de supprimer l'utilisation d'une gorge ou d'une rainure pour le logement du joint, ménagée classiquement au niveau du fond comme représenté à la figure 2, et donc de la nécessité de disposer d'une surface d'appui au niveau de sa portion radialement interne afin de contraindre le joint d'étanchéité radialement dans le but de limiter son étalement radial et de maintenir un écrasement suffisant lors de la déformation de la membrane déformable 12 afin d'assurer les niveaux d'étanchéité requis.

En effet, le joint d'étanchéité 21, 121 selon l'invention présente une rigidité suffisante, notamment au niveau de sa portion radialement interne Pi, pour ne pas avoir besoin d'une surface d'appui apte à limiter son étalement radial lors de sa mise en compression contre la membrane déformable 12.

Ainsi, le joint d'étanchéité 21, 121 selon l'invention permet d'assurer l'étanchéité du boîtier 6 dans toute la gamme des pressions de service du capteur de pression 5 du profondimètre 100, tout en rendant possible la suppression d'une telle gorge ou rainure responsable d'accumulations de résidus salins dans cette région proche de la région périphérique 13 de la membrane déformable 12.

Ainsi, le joint d'étanchéité 21, 121 selon l'invention permet avantageusement de pouvoir supprimer toute nervure, aspérité favorisant une accumulation de résidus salins en cas de mauvais nettoyage du profondimètre 100, tout en assurant les niveaux d'étanchéité requis dans la plage d'utilisation du profondimètre 100.

Le joint d'étanchéité 21, 121 selon l'invention est avantageusement positionné directement sur une face supérieure 28a du fond 28, délimitant la portion inférieure de la chambre de pression 29, la portion supérieure de la chambre de pression 29 étant délimitée par la face inférieure de la membrane déformable 12.

Avec le joint d'étanchéité 21, 121 selon l'invention, la portion périphérique de la chambre de pression 29 est délimité directement par le joint d'étanchéité 21, 121, et notamment par son flanc radialement interne 213, 223.

Comme illustré aux figures 4 et 5, le fond 28 peut toutefois présenter dans une région radialement externe au joint 21, 121, une paroi 27, par exemple verticale ou légèrement inclinée, apte à former une butée latérale pour le positionnement du joint d'étanchéité 21, 121. Ainsi, on évite un glissement de celui-ci lors du montage et on s'assure d'un bon positionnement du joint d'étanchéité 21, 121 en regard de la bande d'appui 25 de la butée rigide 14. Cette région n'étant pas en communication avec le fluide circulant dans la chambre de pression 29, il n'y a pas de risque d'accumulation de résidus salins et donc de risque de détérioration prématurée de la membrane déformable 12.

En référence à la figure 6, le premier exemple de réalisation du joint d'étanchéité 21 présente une section S de forme polygonale, et plus particulièrement de forme trapézoïdale comportant deux côtés parallèles, les deux côtés parallèles du trapèze étant formés par le flanc radialement externe 214 et le flanc radialement interne 213 du joint.

Le section S du joint d'étanchéité 21 présente des surfaces planes séparées les unes des autres par des secteurs arrondis formant des portions de raccord entre les différents surfaces planes ou faces.

Plus spécifiquement, le joint d'étanchéité 21 comporte quatre faces planes :
- une face inférieure 211 ;
- une face supérieure 212 ;
- une face latérale radialement interne formant le flanc radialement interne 213 mentionné précédemment, et
- une face latérale radialement externe formant le flanc radialement externe 214 mentionné précédemment.

Les secteurs arrondis reliant les différentes faces présentent une section en arc de cercle, les arrondis pouvant présenter des rayons de courbure relativement importants.

Préférentiellement, la face latérale radialement interne et la face latérale radialement externe s'étendent selon une direction sensiblement perpendiculaire à la face inférieure 211. Ainsi, les flancs 213, 214 du joint d'étanchéité 21 s'étendent sensiblement perpendiculairement à la face intérieure 211.

La face supérieure 212 du joint d'étanchéité 21 présente au moins une portion présentant une inclinaison par rapport à la face inférieure 211 par exemple une inclinaison supérieure à 0° et inférieure ou égale à 45°.

Dans l'exemple de réalisation illustré à la figure 6, toute la face supérieure 212 est inclinée, toutefois, selon une alternative de réalisation illustré à la figure 8, il est également envisagé que la face supérieure 212 présente une première portion plane 212a parallèle à la face inférieure 211 et une deuxième portion plane 212b présentant une inclinaison par rapport à la face inférieure 211. Dans ce cas, la portion plane inclinée 212b sera positionnée dans une région radialement externe par rapport à la première portion plane 212a.

L'inclinaison d'au moins une portion de la face supérieure 212 du joint d'étanchéité 21, destinée à être en contact avec la membrane déformable 12, permet d'améliorer davantage le comportement du joint d'étanchéité 21 lors du pivotement de la membrane déformable 12 comme expliqué précédemment.

L'inclinaison d'au moins une portion de la face supérieure 212 du joint d'étanchéité 21 permet également d'assurer une pression optimale de contact et plus homogène, lors de la déformation de la membrane déformable 12, quelle que soit la pression régnant dans la chambre 29.

La réalisation d'au moins une surface supérieure inclinée permet d'assurer un niveau de pression de contact suffisant entre le joint d'étanchéité 21 et la membrane déformable 12, dans toute la gamme de pression d'utilisation du profondimètre 100.

Ainsi, grâce à cette géométrie particulière, le joint d'étanchéité 21 selon l'invention permet de compenser les pertes de pression lors du pivotement de la membrane déformable 12 dues à la suppression des parois d'appui formées par une gorge ou une rainure. Ainsi, le joint d'étanchéité 21 permet d'assurer les niveaux d'étanchéité requis notamment lorsque la membrane est déformée, comme illustrée par la figure 5, lorsque les besoins d'étanchéité sont les plus importants, et même en l'absence d'une gorge ou d'une rainure limitant l'étalement du joint.

De plus, grâce au joint d'étanchéité selon l'invention, les pressions de contact au niveau de la membrane déformable 12 et au niveau du fond 28 sont plus homogènes sur l'ensemble des surfaces de contact en comparaison avec un joint torique circulaire en l'absence d'une gorge ou d'une rainure.

La figure 7 illustre un deuxième exemple de réalisation du joint d'étanchéité 121 selon l'invention.

Le joint d'étanchéité 121 est identique au premier exemple de réalisation décrit précédemment, à l'exception de ce qui va être décrit par la suite. Ainsi, l'ensemble des caractéristiques décrites en référence au premier exemple de réalisation sont également valables pour ce deuxième exemple de réalisation.

Le joint d'étanchéité 121 comporte également quatre faces planes :
- une face inférieure 221 ;
- une face supérieure 222 ;
- une face latérale radialement interne formant le flanc radialement interne 223 mentionné précédemment, et
- une face latérale radialement externe formant le flanc radialement externe 224 mentionné précédemment.

Dans ce deuxième exemple de réalisation, la face supérieure inclinée 212 est remplacée par une face supérieure 222 plane, sensiblement parallèle à la face inférieure 221, et de dimension réduite (par exemple de l'ordre de L/2) et le secteur de raccord 225 entre la face supérieure 222 et la face radialement externe 224 présente un rayon de courbure plus important, typiquement de l'ordre de L/2.

Ainsi, la face supérieure 222 et la face radialement externe formant le flanc radialement externe 224 présentent une dimension plus réduite que le premier exemple de réalisation, typiquement de l'ordre de L/2.

La section du joint d'étanchéité 121 selon ce deuxième exemple de réalisation pourrait s'apparenter à une forme en quart de cercle.

De manière identique au premier exemple de réalisation, cette forme du joint d'étanchéité 121, selon ce deuxième exemple de réalisation, permet avantageusement de s'affranchir de l'utilisation d'une gorge ou d'une rainure pour le logement du joint, ménagée classiquement au niveau du fond 28, et de la nécessité de disposer d'une surface d'appui au niveau de sa portion radialement interne afin de contraindre le joint d'étanchéité radialement dans le but de limiter son étalement radial et de maintenir un écrasement cible lors de la compression du joint pour assurer les niveaux d'étanchéité requis.

L'arrondi 225 présentant une surface importante permet également d'améliorer le comportement du joint d'étanchéité 121 lors du pivotement de la membrane déformable 12 afin d'assurer une pression de contact optimum et homogène sur une surface étendue.

Bien entendu d'autres profils de section du joint d'étanchéité sont envisagés sans sortir du contexte de l'invention dès lors qu'ils présentent un volume de matière plus important au niveau d'une portion radialement interne vis-à-vis d'une portion radialement externe et que la face supérieure du joint présente un profil permettant d'accompagner le pivotement de la membrane déformable 12 lorsqu'elle est soumise à un différentiel de pression sans perte d'homogénéité au niveau des pressions de contact.

Le joint d'étanchéité 21, 121 est réalisé en élastomère, par exemple en nitrile.

Le fond 28 peut également comporter un élément d'indexage 31 ménagé sur au moins une portion de la face supérieure 28a du fond 28 pour faciliter le positionnement et le centrage du joint d'étanchéité 21, 121 en l'absence d'une gorge ou d'une rainure.

Cet élément d'indexage 31 forme une protubérance, telle qu'un bossage. L'élément d'indexage 31 s'étend circulairement sur au moins une portion de la face supérieure 28a du fond 28. Préférentiellement, l'élément de d'indexage 31 est circulaire.

Un tel élément d'indexage 31 forme un indicateur visuel et/ou sensitif facilitant le positionnement et le centrage du joint d'étanchéité 21, 121 lors du montage. On notera que cet élément d'indexage 31 présente une hauteur très inférieure à la hauteur du joint d'étanchéité 21, 121 ou encore au rebord vertical 27. En effet, l'élément d'indexage 31, tel que décrit et représenté, n'est pas destiné à former une gorge ou une rainure de positionnement du joint d'étanchéité 21,121 mais forme un léger bossage apte à indiquer le bon centrage du joint d'étanchéité 21, 121.

En ce qui concerne le montage du capteur de pression 17, on comprend aisément qu'il est particulièrement simple, notamment parce qu'il suffit :
- d'insérer la butée rigide 14 dans le boîtier 6,
- de positionner le joint d'étanchéité 21, 121 sur la face supérieure 28a du fond 28,
- de poser la membrane d'étanchéité 12 sur le joint d'étanchéité 21, 121,
- fixer le fond 28 au boîtier 6 de la manière habituelle ; la hauteur du deuxième rebord vertical 24 détermine automatiquement la force de précontrainte appliquée sur le joint d'étanchéité 21, 121.

L'invention concerne également une pièce d'horlogerie, telle qu'une montre, et notamment une montre de plongée, comportant un profondimètre ainsi qu'un joint d'étanchéité selon l'invention apte à assurer l'étanchéité du capteur de pression vis-à-vis du boîtier de la pièce d'horlogerie.

Le joint d'étanchéité selon l'invention permet notamment les avantages suivants :
- assurer les niveaux d'étanchéité requis quelle que soit la profondeur de plongée et donc quelle que soit les positions du capteur de pression ;
- un encombrement similaire aux joints classiquement utilisés dans les profondimètres, et notamment les montres de plongée ;
- la suppression des problématiques de corrosion de la région périphérique de la membrane déformable par la suppression de la gorge ou de la rainure de positionnement du joint d'étanchéité.

## Revendications

1. Profondimètre mécanique à membrane déformable (100) comportant
- un boîtier (6) fermé par un fond (28), ledit fond (28) délimitant une chambre de pression (29) en communication fluidique avec l'extérieur du profondimètre mécanique à membrane déformable (100),
- un capteur de pression (17) comportant une membrane déformable (12) disposée au-dessus de ladite chambre de pression (29),
- un joint d'étanchéité (21 ,121), dissocié de ladite membrane déformable, (12), présentant un axe de révolution (Z) comportant un flanc radialement interne (213, 223) et un flanc radialement externe (214, 224), ledit joint d'étanchéité (21, 121) étant monté et comprimé entre le fond (28) et la membrane déformable (12) et assurant l'étanchéité dudit boîtier (6) vis-à-vis de ladite chambre de pression (29),
**caractérisé en ce que** le flanc radialement interne (213, 223) dudit joint d'étanchéité (21, 121) présente une hauteur (h1) plus importante qu'une hauteur (h2) du flanc radialement externe (214, 224), lorsque le joint d'étanchéité est dans son état non comprimé.

2. Profondimètre mécanique à membrane déformable (100) selon la revendication précédente, **caractérisé en ce que** ledit joint d'étanchéité (21) présente, dans son état non comprimé, une section (S), selon un plan de coupe radial, présentant une forme polygonale.

3. Profondimètre mécanique à membrane déformable (100) selon la revendication précédente, **caractérisé en ce que** ladite section (S) présente une forme trapézoïdale comportant deux côtés parallèles, les deux côtés parallèles du trapèze étant formés par le flanc radialement externe (214) et le flanc radialement interne (213).

4. Profondimètre mécanique à membrane déformable (100) selon l'une des revendications 2 à 3, **caractérisé en ce que** ladite section (S) présente une face supérieure (212) comportant au moins une portion plane inclinée par rapport à une face inférieure (211).

5. Profondimètre mécanique à membrane déformable (100) selon l'une des revendications 2 à 3, **caractérisé en ce que** ladite face supérieure (212) comporte une première portion plane (212a) parallèle à une face inférieure (211) et une portion plane (212b) inclinée par rapport à ladite face inférieure (211).

6. Profondimètre mécanique à membrane déformable (100) selon l'une des revendications 4 à 5, **caractérisé en ce que** ladite au moins une portion plane inclinée (212b) présente une inclinaison par rapport à ladite face inférieure (211), ladite inclinaison étant supérieure à 0° et inférieure ou égale à 45°.

7. Profondimètre mécanique à membrane déformable (100) selon la revendication 1, **caractérisé en ce que** ledit joint d'étanchéité (121) présente, dans son état non comprimé, une section (S'), selon un plan de coupe radial, présentant une forme en quart de cercle.

8. Profondimètre mécanique à membrane déformable (100) selon l'une des revendications précédentes, **caractérisé en ce que** le joint d'étanchéité est en élastomère, préférentiellement en nitrile.

9. Profondimètre mécanique à membrane déformable (100), **caractérisée en ce que** ledit joint (21, 121) est comprimé contre ladite membrane déformable (12) dudit capteur de pression (17).

10. Profondimètre mécanique à membrane déformable (100) selon l'une des revendications précédentes, **caractérisé en ce que** ledit joint d'étanchéité (21, 121) est comprimé et forme un élément d'appui de ladite membrane déformable (12).

11. Profondimètre mécanique à membrane déformable (100) selon la revendication précédente, **caractérisé en ce que** ledit joint d'étanchéité (21, 121) est disposé au niveau d'une région périphérique (13) de ladite membrane déformable (12).

12. Profondimètre mécanique à membrane déformable (100) selon la revendication précédente, **caractérisé en ce que** ladite région périphérique (13) de la membrane déformable (12) peut pivoter en appui sur le joint d'étanchéité (21, 121) lorsque la membrane déformable (12) se déforme sous l'effet d'une variation de pression dans la chambre de pression (29).

13. Profondimètre mécanique à membrane déformable (100) selon l'une des revendications 1 à 12, **caractérisé en ce que** ledit fond (28) comporte une face supérieure (28a) délimitant une portion inférieure de ladite chambre de pression (29), ledit joint d'étanchéité (21, 121) étant positionné directement sur la face supérieure (28a) du fond (28) délimitant ladite portion inférieure de ladite chambre de pression (29), ledit fond (28) étant dépourvu d'une gorge ou d'une rainure pour le logement dudit joint d'étanchéité (21, 121).

14. Profondimètre mécanique à membrane déformable (100) selon la revendication précédente, **caractérisé en ce que** ledit profondimètre (100) comporte un organe d'indexage (31) ménagé sur ladite face supérieure (28a) du fond (28) pour faciliter le centrage dudit joint d'étanchéité (21, 121) ; ledit élément d'indexage (31) formant un indicateur visuel et/ou sensitif facilitant le positionnement et le centrage du joint d'étanchéité (21, 121) lors du montage.

15. Profondimètre mécanique à membrane déformable (100) selon l'une des revendications 1 à 14, **caractérisé en ce que** ledit joint d'étanchéité (21, 121) délimite une portion périphérique de ladite chambre de pression (29).

16. Profondimètre mécanique à membrane déformable (100) selon l'une des revendications 1 à 15, **caractérisé en ce que** ladite membrane déformable (12) est formée par un disque métallique ou par un disque en alliage métallique amorphe.

17. Pièce d'horlogerie comportant un profondimètre mécanique à membrane déformable (100) selon l'une des revendications 1 à 16.

## Patentansprüche

1. Mechanischer Tiefenmesser mit verformbarer Membran (100), umfassend
- ein Gehäuse (6), das durch eine Bodenplatte (28) verschlossen ist, wobei die genannte Bodenplatte (28) eine Druckkammer (29) begrenzt, die fluidisch mit dem Außenraum des mechanischen Tiefenmessers mit verformbarer Membran (100) in Verbindung steht,
- einen Drucksensor (17) mit einer verformbaren Membran (12), die oberhalb der genannten Druckkammer (29) angeordnet ist,
- eine Dichtung (21, 121), die von der genannten verformbaren Membran (12) getrennt ist, die rotationssymmetrisch um eine Achse (Z) ausgebildet ist und eine radial innere Flanke (213, 223) sowie eine radial äußere Flanke (214, 224) aufweist, wobei die genannte Dichtung (21, 121) zwischen der Bodenplatte (28) und der verformbaren Membran (12) montiert und zusammengepresst ist und die Dichtheit des genannten Gehäuses (6) gegenüber der genannten Druckkammer (29) gewährleistet,
**dadurch gekennzeichnet, dass** die radial innere Flanke (213, 223) der genannten Dichtung (21, 121) eine größere Höhe (h1) aufweist als die Höhe (h2) der radial äußeren Flanke (214, 224), wenn sich die Dichtung im unkomprimierten Zustand befindet.

2. Mechanischer Tiefenmesser mit verformbarer Membran (100) nach Anspruch 1, **dadurch gekennzeichnet, dass** die genannte Dichtung (21) in ihrem unkomprimierten Zustand einen Querschnitt (S) in einer radialen Schnittebene mit polygonaler Form aufweist.

3. Mechanischer Tiefenmesser mit verformbarer Membran (100) nach dem vorstehenden Anspruch, **dadurch gekennzeichnet, dass** der genannte Querschnitt (S) trapezförmig mit zwei parallelen Seiten ausgebildet ist, wobei die beiden parallelen Seiten des Trapezes durch die radial äußere Flanke (214) und die radial innere Flanke (213) gebildet sind.

4. Mechanischer Tiefenmesser mit verformbarer Membran (100) nach einem der Ansprüche 2 bis 3, **dadurch gekennzeichnet, dass** der genannte Querschnitt (S) eine obere Fläche (212) aufweist, die mindestens einen gegenüber einer unteren Fläche (211) geneigten ebenen Abschnitt umfasst.

5. Mechanischer Tiefenmesser mit verformbarer Membran (100) nach einem der Ansprüche 2 bis 3, **dadurch gekennzeichnet, dass** die genannte obere Fläche (212) einen ersten ebenen Abschnitt (212a) umfasst, der parallel zu einer unteren Fläche (211) verläuft, und einen ebenen Abschnitt (212b), der gegenüber der genannten unteren Fläche (211) geneigt ist.

6. Mechanischer Tiefenmesser mit verformbarer Membran (100) nach einem der Ansprüche 4 bis 5, **dadurch gekennzeichnet, dass** der mindestens eine geneigte ebene Abschnitt (212b) gegenüber der genannten unteren Fläche (211) eine Neigung aufweist, die größer als 0° und kleiner oder gleich 45° ist.

7. Mechanischer Tiefenmesser mit verformbarer Membran (100) nach Anspruch 1, **dadurch gekennzeichnet, dass** die genannte Dichtung (121) in ihrem unkomprimierten Zustand einen Querschnitt (S') in einer radialen Schnittebene mit viertelkreisförmiger Form aufweist.

8. Mechanischer Tiefenmesser mit verformbarer Membran (100) nach einem der vorstehenden Ansprüche, **dadurch gekennzeichnet, dass** die Dichtung aus Elastomer besteht, vorzugsweise aus Nitril.

9. Mechanischer Tiefenmesser mit verformbarer Membran (100), **dadurch gekennzeichnet, dass** die genannte Dichtung (21, 121) gegen die genannte verformbare Membran (12) des genannten Drucksensors (17) angepresst ist.

10. Mechanischer Tiefenmesser mit verformbarer Membran (100) nach einem der vorstehenden Ansprüche, **dadurch gekennzeichnet, dass** die genannte Dichtung (21, 121) komprimiert ist und ein Auflageelement für die genannte verformbare Membran (12) bildet.

11. Mechanischer Tiefenmesser mit verformbarer Membran (100) nach dem vorstehenden Anspruch, **dadurch gekennzeichnet, dass** die genannte Dichtung (21, 121) im Bereich einer peripheren Region (13) der genannten verformbaren Membran (12) angeordnet ist.

12. Mechanischer Tiefenmesser mit verformbarer Membran (100) nach dem vorstehenden Anspruch, **dadurch gekennzeichnet, dass** die genannte periphere Region (13) der verformbaren Membran (12) beim Verformen der verformbaren Membran (12) infolge einer Druckänderung in der Druckkammer (29) auf der Dichtung (21, 121) in Auflage verschwenken kann.

13. Mechanischer Tiefenmesser mit verformbarer Membran (100) nach einem der Ansprüche 1 bis 12, **dadurch gekennzeichnet, dass** die Bodenplatte (28) eine Oberseite (28a) aufweist, die einen unteren Abschnitt der genannten Druckkammer (29) begrenzt, wobei die genannte Dichtung (21, 121) unmittelbar auf der Oberseite (28a) der Bodenplatte (28), die den genannten unteren Abschnitt der genannten Druckkammer (29) begrenzt, positioniert ist, und wobei die Bodenplatte (28) keine Nut oder Rille zur Aufnahme der genannten Dichtung (21, 121) aufweist.

14. Mechanischer Tiefenmesser mit verformbarer Membran (100) nach dem vorstehenden Anspruch, **dadurch gekennzeichnet, dass** das genannte Tiefenmesser (100) ein an der genannten Oberseite (28a) der Bodenplatte (28) ausgebildetes Indexierelement (31) aufweist, um die Zentrierung der genannten Dichtung (21, 121) zu erleichtern; wobei das genannte Indexierelement (31) einen visuellen und/oder haptischen Indikator bildet, der die Positionierung und Zentrierung der Dichtung (21, 121) während der Montage erleichtert.

15. Mechanischer Tiefenmesser mit verformbarer Membran (100) nach einem der Ansprüche 1 bis 14, **dadurch gekennzeichnet, dass** die genannte Dichtung (21, 121) einen peripheren Bereich der genannten Druckkammer (29) begrenzt.

16. Mechanischer Tiefenmesser mit verformbarer Membran (100) nach einem der Ansprüche 1 bis 15, **dadurch gekennzeichnet, dass** die genannte verformbare Membran (12) durch eine Metallscheibe oder durch eine Scheibe aus amorpher Metalllegierung gebildet ist.

17. Uhr, umfassend einen mechanischen Tiefenmesser mit verformbarer Membran (100) nach einem der Ansprüche 1 bis 16.

## Claims

1. Mechanical depth gauge with deformable membrane (100) comprising:
- a case (6) closed by a bottom (28), said bottom (28) delimiting a pressure chamber (29) in fluidic communication with the outside of the mechanical depth gauge with deformable membrane (100),
- a pressure sensor (17) comprising a deformable membrane (12) disposed above said pressure chamber (29);
- a seal (21, 121), dissociated from said deformable membrane (12), having an axis of revolution (Z), comprising a radially inner flank (213, 223) and a radially outer flank (214, 224), said seal (21, 121) being mounted and compressed between the bottom (28) and the deformable membrane (12), and ensuring the tightness of said case (6) in relation to said pressure chamber (29).
**characterised in that** the radially inner flank (213, 223) of said seal (21, 121) has a height (h1) greater than a height (h2) of the radially outer flank (214, 224), when the seal is in its uncompressed state.

2. Mechanical depth gauge with deformable membrane (100) according to the preceding claim, **characterised in that** said seal (21) has a section (S), along a radial cutting plane, having a polygonal shape.

3. Mechanical depth gauge with deformable membrane (100) according to the preceding claim, **characterised in that** said section (S) has a trapezoidal shape comprising two parallel sides, the two parallel sides of the trapezium being formed by the radially outer flank (214) and the radially inner flank (213).

4. Mechanical depth gauge with deformable membrane (100) according to one of claims 2 to 3, **characterised in that** said section (S) has a top face (212) comprising at least one inclined planar portion with respect to a bottom face (211).

5. Mechanical depth gauge with deformable membrane (100) according to one of claims 2 to 3, **characterised in that** said top face (212) comprises a first planar portion (212a) parallel with a bottom face (211) and an inclined planar portion (212b) with respect to said bottom face (211).

6. Mechanical depth gauge with deformable membrane (100) according to one of claims 4 to 5, **characterised in that** said at least one inclined planar portion (212b) has an inclination with respect to said bottom face (211), said inclination being greater than 0° and less than or equal to 45°.

7. Mechanical depth gauge with deformable membrane (100) according to claim 1, **characterised in that** said seal (121) has, in its uncompressed state, a section (S'), along a radial cutting plane, having a quarter-circle shape.

8. Mechanical depth gauge with deformable membrane (100) according to one of the preceding claims, **characterised in that** seal is made of elastomer, preferably of nitrile.

9. Mechanical depth gauge with deformable membrane (100), according to one of the preceding claims, **characterised in that** said seal (21, 121) is configured to be compressed against said deformable membrane (12) of said pressure sensor (17).

10. Mechanical depth gauge with deformable membrane (100) according to one of the preceding claims, **characterised in that** said seal (21, 121) is compressed and forms a support element of said deformable membrane (12).

11. Mechanical depth gauge with deformable membrane (100) according to the preceding claim, **characterised in that** said seal (21, 121) is disposed at a peripheral region (13) of said deformable membrane (12).

12. Mechanical depth gauge with deformable membrane (100) according to the preceding claim, **characterised in that** said peripheral region (13) of the deformable membrane (12) can pivot pressing on the seal (21, 121) when the deformable membrane (12) is deformed under the effect of an increase in pressure in the pressure chamber (29).

13. Mechanical depth gauge with deformable membrane (100) according to one of claims 1 to 12, **characterised in that** said bottom (28) comprises a top face (28a) delimiting a bottom portion of said pressure chamber (29), said seal (21, 121) being positioned directly on the top face (28a) of the bottom (28) delimiting said bottom portion of said pressure chamber (29), said bottom (28) is devoid of a channel or a groove for housing said seal (21, 121).

14. Mechanical depth gauge with deformable membrane (100) according to the preceding claim, **characterised in that** said depth gauge (100) comprises an indexing member (31) arranged on said top face (28a) of the bottom (28) to facilitate the centring of said seal (21, 121), said indexing member (31) forming a visual and/or sensory indicator facilitating the positioning and centring of the seal (21, 121) during assembly.

15. Mechanical depth gauge with deformable membrane (100) according to one of claims 1 to 14, **characterised in that** said seal (21, 121) delimits a peripheral portion of said pressure chamber (29).

16. Mechanical depth gauge with deformable membrane (100) according to one of claims 1 to 15, **characterised in that** said deformable membrane (12) is formed by a metallic disk or by an amorphous metal alloy disk.

17. Timepiece comprising a mechanical depth gauge with deformable membrane (100) according to one of claims 1 to 16.
